# EUROPEAN PATENT SPECIFICATION

(11) **EP 1 434 484 B1**
(45) Date of publication and mention of the grant of the patent: **29.06.2005**
(21) Application number: 02702487.6
(22) Date of filing: 23.02.2002
(51) Int. Cl.: A01K 97/00

(54) **RIG TESTING DEVICES**
KÖDERSYSTEMPRÜFVORRICHTUNG
DISPOSITIFS D'ESSAI D'UN ACCESSOIRE DE PECHE A LA LIGNE

(30) Priority: 02.10.2001 GB 0123615
(43) Date of publication of application: 07.07.2004
(73) Proprietor: Woodfield, Paul Benedict, Leicester LE7 7BL (GB)
(72) Inventor: Woodfield, Paul Benedict, Leicester LE7 7BL (GB)
(74) Representative: Smith, Peter James
(86) International application number: PCT/GB2002/000815
(87) International publication number: WO 2003/028447

(56) References cited:
- US-A- 4 914 847
- US-B1- 6 240 673

## Description

### Technical Field

The present invention relates to bait and rig testing devices for anglers according to the preamble of claim 1. A similar device is already known from US-B1-6 240 673.

### Background Art

Fish feed by a specific movement of their mouth, together with a sucking and blowing of water through their mouth. This movement of water is created by their throat and gills and allows the fish to test food or bait before attempting to eat it.

The way in which bait is presented to a fish is therefore very important to ensure that it is taken cleanly and that the hook engages the mouth of the fish in the correct position during this feeding action. The correct position for the hook to set and penetrate the mouth of the fish is the bottom corner of the mouth and lips, in the dead tissue and gristle.

Hooking a fish in the correct position of the mouth allows the angler to play the fish with the minimum of damage to the fish, if any. The fish may then be returned to the water safely. Hooking the fish in any other position is potentially harmful or fatal.

Fishing rigs are the configuration of hook, bait or lure, fishing line and components at the end of the main fishing line used for angling. Understanding rigs is crucial to the art of angling. Different rigs need to be used in different environmental conditions.

The present invention allows the angler to visibly test his/her rig configuration for correct hooking qualities.

### Summary of the Invention

The present invention provides a rig testing device, comprising a tubular throat section, a mouth section at one end of the throat section, the mouth section being shaped to mimic the mouth of a fish, and a pump at the other end of the throat section for pumping water into and out of the throat section through the mouth section when the device is underwater.

The rig testing device essentially mimics the mouth of a feeding fish and is based on a fish's unique way of moving water through its mouth and into and out of its gills. The rig testing device mimics this movement of water and bait/food, as if the fish was mouthing the food and consequently feeding on it.

The bottom corners of a fish's mouth are gristle with little or no nerve endings and therefore are the ideal positions for hooking a fish. The rig testing device is specifically designed to maximise the correct hooking of fish and minimise the damage caused to a fish by incorrect and/or foul hooking.

The rig testing device would benefit the welfare of the fish and promote awareness for animal conservation and wildlife in general. The rig testing device needs to be portable for use on riverbanks and lakesides and for use at home. It may also be used for teaching anglers with different levels of expertise in any situation where the feeding of fish needs to be mimicked.

The rig testing device allows the angler to test the bait, hook or lure configuration, on the surface or at any depth under water for:
(i) the correct movement during the sucking and blowing process of a feeding fish specifically;
(ii) the movement of any component of fishing equipment presented near to the mouth of a fish in order to hook the fish; and
(iii) the 'hooking' qualities of the rig or lure.

The pump is preferably a bladder, which can be compressed to expel water through the mouth section, the bladder being sufficiently resilient to draw water in through the mouth section when the bladder is released.

The mouth section preferably has moving parts that can move between a first, open position and a second, more closed position.

The rig testing device can also include a sliding switch for mechanically moving the movable parts of the mouth section.

Alternatively, the rig testing device can also hydraulic or pneumatic means for moving the movable parts of the mouth section. In this case the hydraulic or pneumatic means preferably include an inflatable chamber in the mouth section and a resilient bulb in fluid communication with the chamber.

The rig testing device can be made of any material including rubber, silicone, plastics material, wood, rope, meshes and fibres.

### Drawings

FIG. 1 shows a rig testing device according to a first embodiment of the present invention;
FIG. 1a shows the rig testing device of FIG. 1 with the mouth in an open and closed position;
FIG. 2a and 2b shows the rig testing device of FIG. 1 at a first stage of operation, where the lung section is repeatedly squeezed and released;
FIG. 3a shows the rig testing device of FIG. 1 at a second stage of operation, where the lung section is being squeezed;
FIG. 3b shows the rig testing device of FIG. 1 at a third stage of operation, where the lung section is released;
FIG. 4 shows the rig testing device of FIG. 1 at a fifth stage of operation, where the lung section is being squeezed again;
FIG. 5a shows a rig testing device according to a second embodiment of the present invention;
FIG. 5b shows a rig testing device according to a third embodiment of the present invention; and
FIG. 6 shows how the rig testing device of FIG. 5b can be used with two hands.

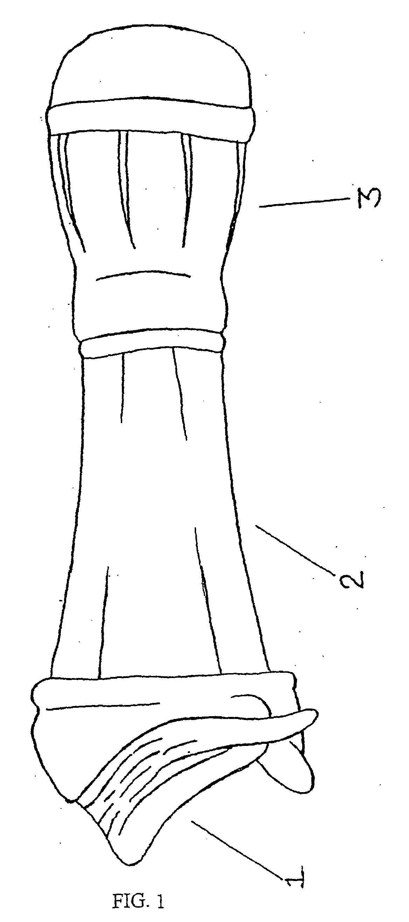

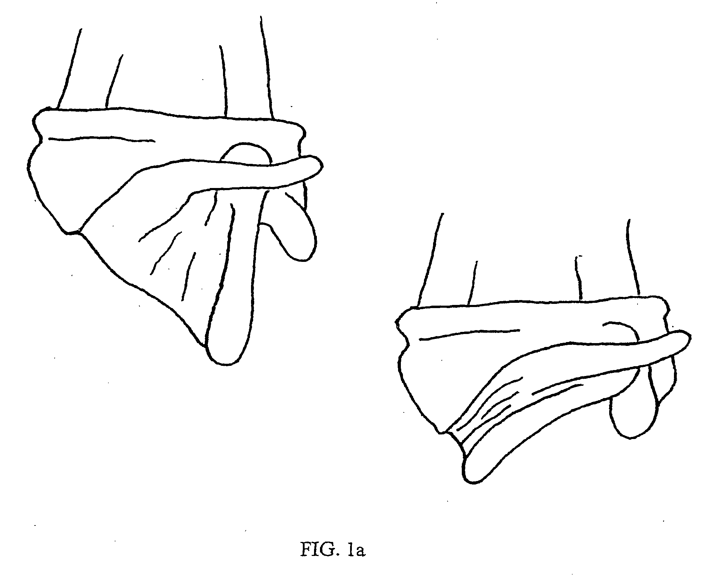

The rig testing device shown in FIG. 1 includes a mouth section 1 which may be moveable depending on the specific fish being mimicked, a tubular throat section 2 of variable length and diameter and a lung section 3. The lung section 3 may be of varying size and volume depending on the specific fish being mimicked. FIG. 1a shows how the mouth section 1 has lips that can move between a first, open position and a second, more closed position.

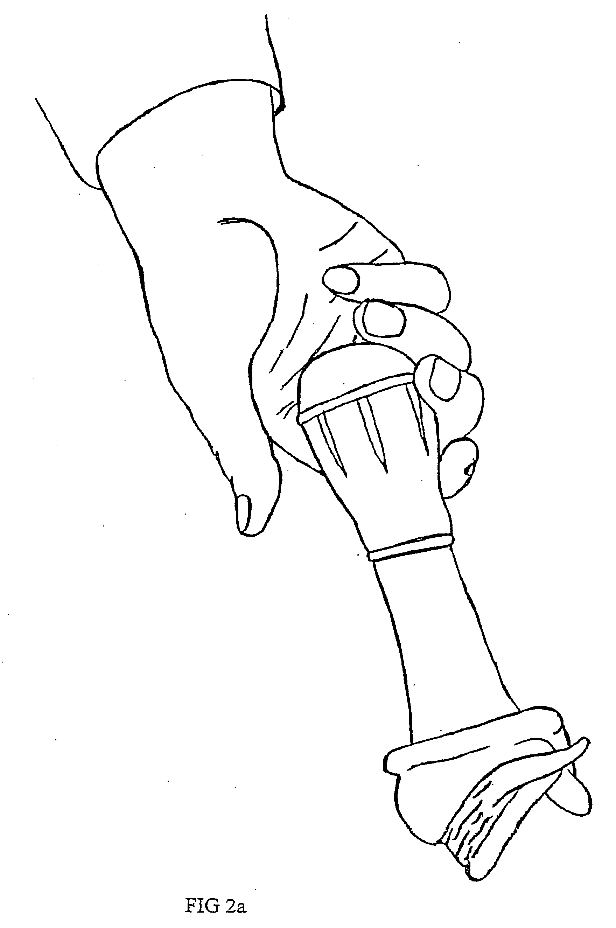

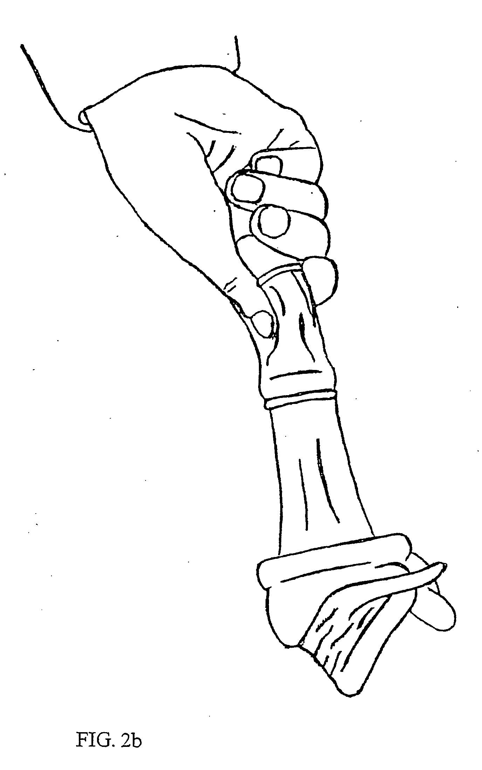

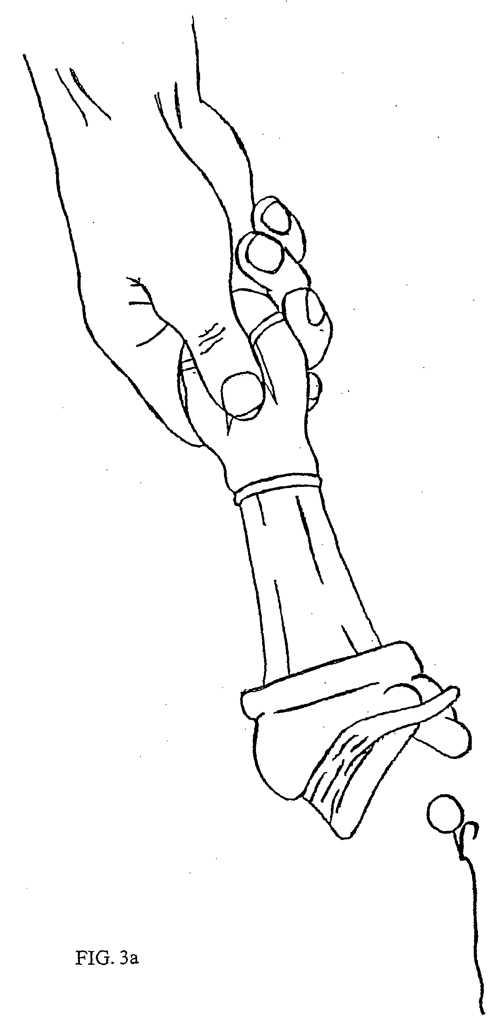

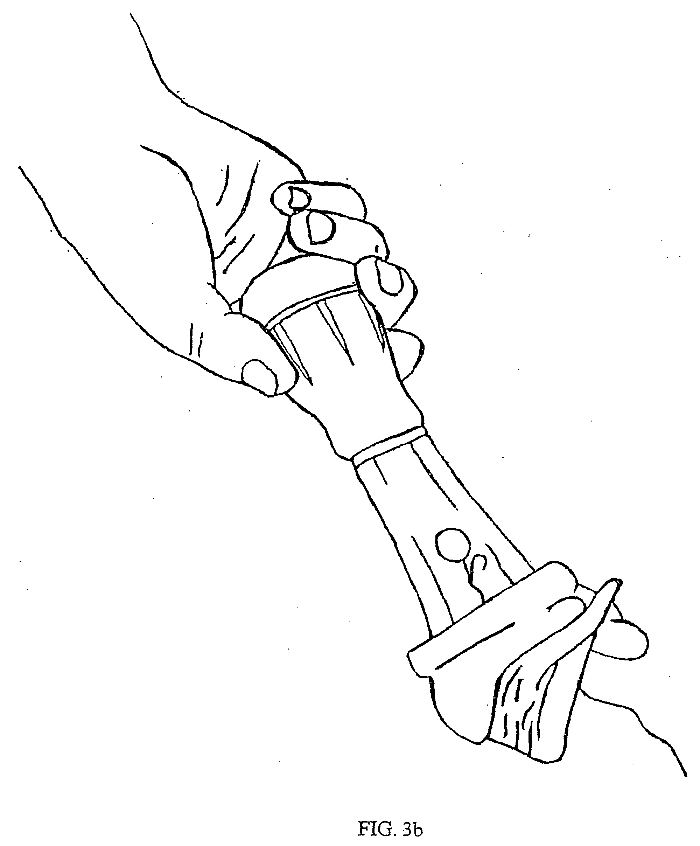

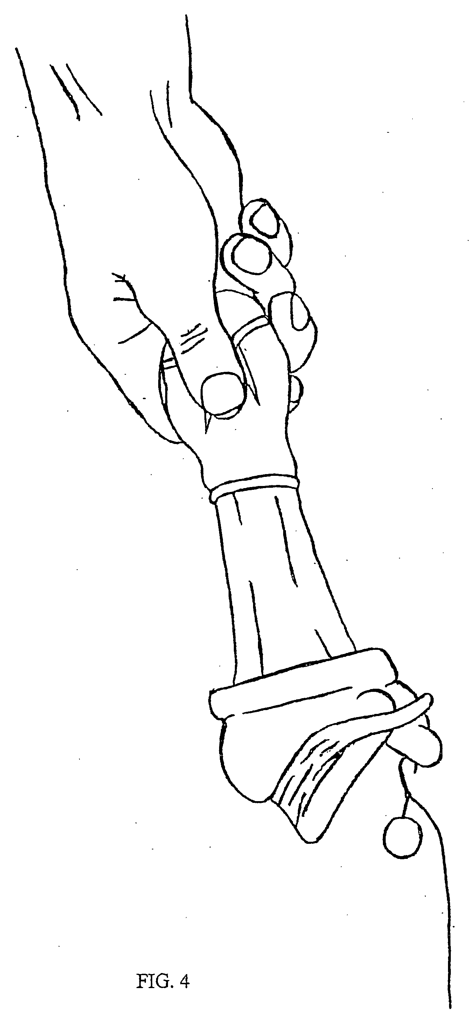

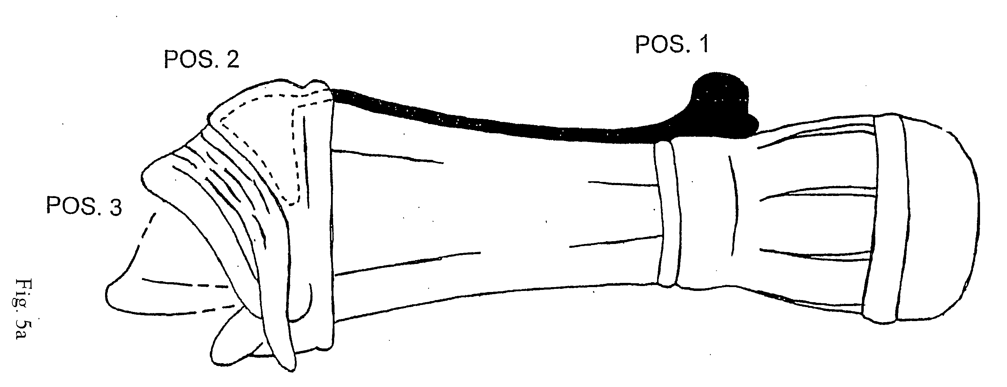

The operation of the rig testing device will now be explained with reference to FIGs. 1a to 5.

### Stage 1

### (FIGs. 2a and 2b)

First of all the rig testing device is submerged in the water and the lung section 3 is repeatedly squeezed and released until the rig testing device is fully purged of all entrapped air. The rig testing device is now ready for use.

### Stage 2

### (FIG. 3a)

Once the rig testing device is fully purged, the lung section 3 is fully squeezed, held in this position and presented close to the bait and hook or rig to be tested, at a distance similar to a feeding fish.

### Stage 3

### (FIG. 3b)

The lung section 3 is then released allowing water and bait to be sucked into the rig testing device.

### Stage 4

### (FIG. 4)

Finally the lung section 3 is again squeezed to eject the baited hook and any excess water. This action allows the hook, if correctly tied, to set into the mouth of the rig testing device in the desired position.

The usefulness of the rig testing device is not limited only to the conventional bait and hook type rigs used in angling. It can also be used independently to test the effect of a feeding fish on individual components or a combination of any components used in any configuration of a fishing rig or lure. The rig testing device can be used in all types of waters that are fished, and can be tested in any environment.

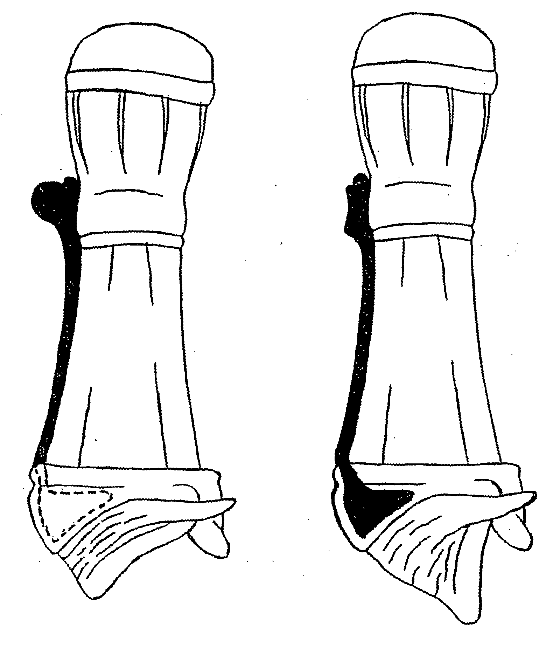

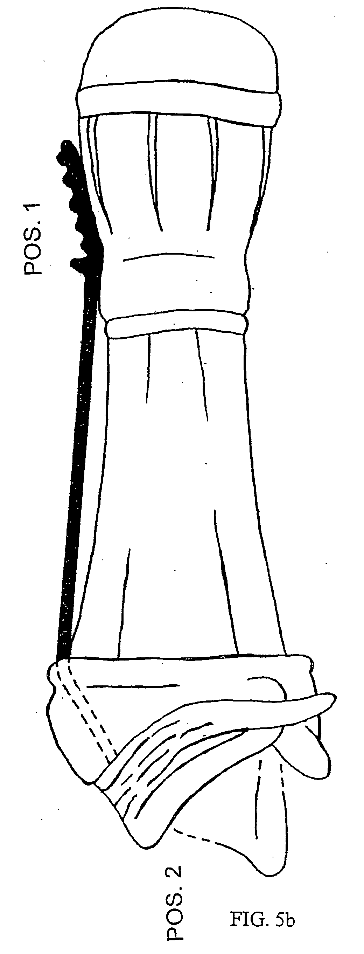

Additionally a simulated mouth/lip movement mechanism may be incorporated into the rig testing device. Two examples are illustrated in FIGs. 5a and 5b.

The rig testing device shown in FIG. 5a includes a button containing compressed air. To operate this additional mechanism, the button is pressed forcing air to pass through the tube and into the lips which form part of the mouth. Here an air pocket is filled to push the top lip out. The rig testing device can be used with one hand as follows:
Press POS. 1. This forces air through the tube and into POS. 2. Once filled, the lips move from POS. 2 to POS. 3.

The rig testing device shown in FIG. 5b includes a slide switch as an example of a mechanism that operates the lips enabling them to move independently of the lung section. The mechanism is simply operated by sliding the switch/ thumb grip forward/backward in one easy movement as follows:
Press at POS. 1 to slide switch forward through POS. 2 and directly to POS. 3. This forces the top lip down and into the closed position.

The mouth section may also contain a different movable lip/mouth device. There are various ways of achieving this specific movement according to the specific fish being mimicked. Options to obtain this movement include:
(i) a waterproof motorised lip which would include a power source, components and a switch;
(ii) a hydraulic mechanism to move lips into any desired position;
(iii) a pump to inflate lips into any desired position; and
(iv) a control valve that operates when the desired pressure is reached;

The lip movement may be obtained by the use of any lever, button, switch or mechanism. The inhalation and exhalation of the lung section may also be achieved using a variety of methods to create the required hydraulic action such as a hand pump, motorised pump or other pressurising devices.

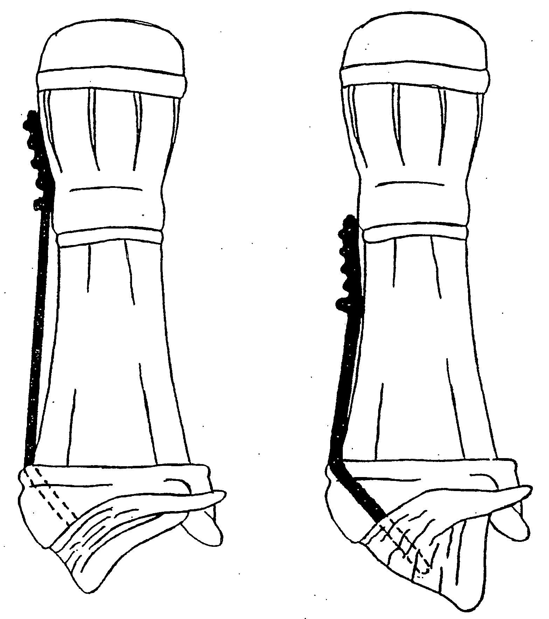

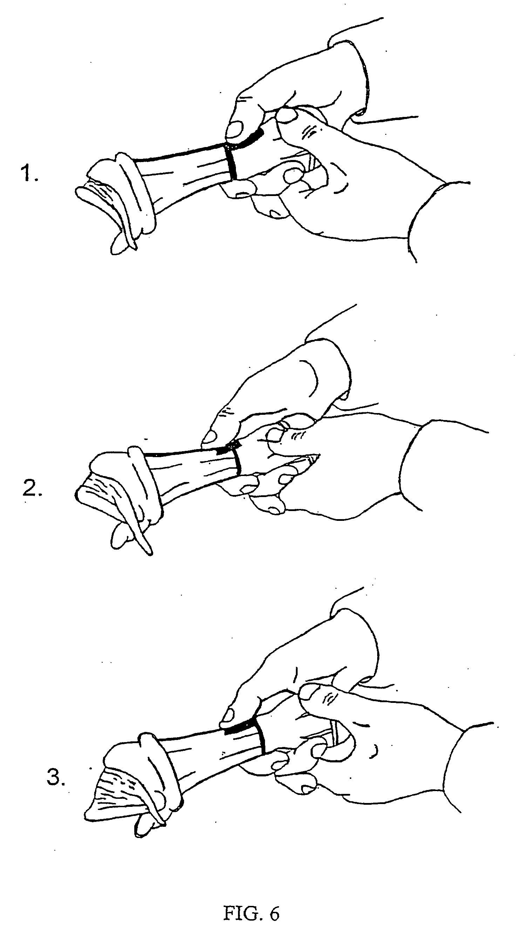

FIG. 6 shows how the rig testing device shown in FIG. 5b can be operated with two hands.

### Stage 1

This illustrates the slide-switch mechanism shown in FIG. 5b being used in a two handed operation. However the mechanism can be used in a single-handed operation as described above. The top drawing shows the top lip fully retracted.

### Stage 2

The middle drawings illustrates how the movement of the lip/mouth mechanism may be operated at any time totally independently of any other part of the device.

### Stage 3

The bottom drawing shows the top lip fully closed, with the lung section full to capacity with water.

The next procedure would be to squeeze the lung section and slide forward the thumb grip at the same time to mimic the fish spitting out a bait and hook configuration or debris etc.

## Claims

1. A rig testing device, comprising:
a tubular throat section (2);
a mouth section (1) at one end of the throat section (2), the mouth section (1) being shaped to mimic the mouth of a fish; **characterized by**
a pump (3) at the other end of the throat section (2) for pumping water into and out of the throat section (2) through the mouth section (1) when the device is underwater.

2. A rig testing device according to claim 1, wherein the pump is a bladder (3), which can be compressed to expel water through the mouth section (1), the bladder (3) being sufficiently resilient to draw water in through the mouth section (1) when the bladder (3) is released.

3. A rig testing device according to claim 1 or claim 2, wherein the mouth section (1) has movable parts that can move between a first, open position and a second, more closed position.

4. A rig testing device according to claim 3, further comprising a sliding switch for mechanically moving the movable parts of the mouth section (1).

5. A rig testing device according to claim 3, further comprising hydraulic or pneumatic means for moving the movable parts of the mouth section (1).

6. A rig testing device according to claim 5, wherein the hydraulic or pneumatic means include an inflatable chamber in the mouth section (1) and a resilient bulb in fluid communication with the chamber.

## Patentansprüche

1. Ködersystemprüfvorrichtung mit
einem rohrförmigen Halsabschnitt (2);
einem Maulabschnitt (1) an einem Ende des Halsabschnitts (2), wobei der Maulabschnitt (1) in einer Form gestaltet ist, die das Maul eines Fisches vortäuscht, **gekennzeichnet durch** eine Pumpe (3) am anderen Ende des Halsabschnitts (2), um Wasser **durch** den Maulabschnitt (1) in den Halsabschnitt (2) hinein und wieder hinaus zu pumpen, wenn sich die Vorrichtung unter Wasser befindet.

2. Ködersystemprüfvorrichtung nach Anspruch 1, bei der die Pumpe eine Blase (3) ist, welche komprimiert werden kann, um durch den Maulabschnitt (1) Wasser auszustossen, wobei die Blase (3) ausreichend elastisch ist, um durch den Maulabschnitt (1) Wasser einzuziehen, wenn die Blase (3) entspannt wird.

3. Ködersystemprüfvorrichtung gemäß Anspruch 1 oder Anspruch 2, bei der der Maulabschnitt (1) bewegliche Teile hat, welche zwischen einer ersten geöffneten Position und einer zweiten geschlossenen Position bewegbar sind.

4. Ködersystemprüfvorrichtung nach Anspruch 3, mit einem Schiebeschalter zum mechanischen Bewegen der mechanischen Teile des Maulabschnitts (1).

5. Ködersystemprüfvorrichtung nach Anspruch 2, mit einer hydraulischen oder pneumatischen Einrichtung zum Bewegen der bewegbaren Teile des Maulabschnitts (1).

6. Ködersystemprüfvorrichtung nach Anspruch 5, bei der die hydraulische oder pneumatische Einrichtung eine aufblasbare Kammer in dem Maulabschnitt (1) und eine elastische Blase in Fluidverbindung mit der Kammer aufweist.

## Revendications

1. Dispositif d'essai d'un accessoire de pêche à la ligne, comprenant :
une section de gorge (2) tubulaire ;
une section de gueule (1) à une extrémité de la section de gorge (2), la section de gueule (1) étant formée pour imiter la gueule d'un poisson ; **caractérisé par**
une pompe (3) à l'autre extrémité de la section de gorge (2) pour pomper de l'eau dans et hors de la section de gorge (2) au travers de la section de gueule (1) lorsque le dispositif est sous l'eau.

2. Dispositif d'essai d'un accessoire de pêche à la ligne selon la revendication 1, dans lequel la pompe est une vessie (3), qui peut être comprimée pour expulser de l'eau à travers la section de gueule (1), la vessie (3) étant suffisamment élastique pour aspirer de l'eau à travers la section de gueule (1) quand la vessie (3) est relâchée.

3. Dispositif d'essai d'un accessoire de pêche à la ligne selon la revendication 1 ou la revendication 2, dans lequel la section de gueule (1) comprend des parties mobiles qui peuvent se déplacer entre une première position ouverte et une seconde position plus fermée.

4. Dispositif d'essai d'un accessoire de pêche à la ligne selon la revendication 3, comprenant en outre une baguette coulissante pour déplacer mécaniquement les parties mobiles de la section de gueule (1).

5. Dispositif d'essai d'un accessoire de pêche à la ligne selon la revendication 3, comprenant en outre des moyens hydrauliques ou pneumatiques pour déplacer les parties mobiles de la section de gueule (1).

6. Dispositif d'essai d'un accessoire de pêche à la ligne selon la revendication 5, dans lequel les moyens hydrauliques ou pneumatiques comprennent une chambre gonflable dans la section de gueule (1) et une poire élastique en communication de fluide avec la chambre.
